Europäisches Patentamt

European Patent Office

Office européen des brevets

(19)

(11) Numéro de publication: **0 265 379 B1**

(12) **FASCICULE DE BREVET EUROPEEN**

(45) Date de publication du fascicule du brevet:
05.12.90

(51) Int. Cl.⁵: **B23Q 5/40**, F16H 25/24,
B23Q 1/26

(21) Numéro de dépôt: **87810575.8**

(22) Date de dépôt: **07.10.87**

(54) **Actionneur à vis pour translateurs, notamment de haute précision.**

(30) Priorité: **14.10.86 FR 8614230**

(43) Date de publication de la demande:
**27.04.88 Bulletin 88/17**

(45) Mention de la délivrance du brevet:
**05.12.90 Bulletin 90/49**

(84) Etats contractants désignés:
**AT BE CH DE GB IT LI LU NL SE**

(56) Documents cités:
**CH-A- 403 535**
**CH-A- 477 260**
**DE-A- 2 211 458**
**FR-A- 1 524 085**
**GB-A- 684 846**

(73) Titulaire: **CENTRE SUISSE D'ELECTRONIQUE ET DE MICROTECHNIQUE S.A., Maladière 71, CH-2007 Neuchâtel(CH)**

(72) Inventeur: **Genequand, Pierre M., rue de Moillebeau 25, CH-1209 Genève(CH)**
Inventeur: **Schwab, Philippe, rue des Moulins 56b, CH-1400 Yverdon(CH)**

(74) Mandataire: **Brulliard, Joel, c/o CENTRE SUISSE D'ELECTRONIQUE ET DE MICROTECHNIQUE S.A. Maladière 71, CH-2007 Neuchâtel(CH)**

## Description

La présente invention concerne selon le préambule de la revendication 1 les translateurs et plus particulièrement les translateurs de petites dimensions qui sont utilisés pour positionner ou déplacer avec une grande précision des objets comme par exemple des pièces à usiner au μm près, des composants d'un appareil d'optique (miroirs, prismes, etc), des fibres optiques à aligner en vue de leur assemblage bout à bout ou des plaques de matériau semiconducteur, communément appelés "wafers", lors de la fabrication de circuits intégrés.

Plus précisément, l'invention se rapporte aux actionneurs ou dispositifs d'avance à vis micrométrique dont ces translateurs sont équipés. Un tél dispositif est décrit par exemple dans le document GB-A 684 846.

Dans le domaine de la mécanique de moyenne précision et notamment celui des machines-outils, on se contente en général d'une précision et d'une reproductibilité de l'ordre de 5 à 50 μm de sorte que les problèmes de poids et d'encombrement ne sont pas primordiaux On fait donc appel depuis longtemps déjà dans ce domaine, pour la réalisation de translateurs à des actionneurs comprenant un ensemble composé d'une vis et d'un écrou formant chariot. La vis peut tourner dans des paliers d'un châssis tout en étant immobilisée axialement par des butées. Le chariot est guidé par des coulisses parallèles qui l'astreignent à se déplacer parallèlement à l'axe de la vis. A ceci s'ajoutent des moyens pour entraîner la vis en rotation dans les deux sens qui sont constitués par exemple par un moteur et un train d'engrenages mais qui peuvent aussi être manuels.

Cette façon simple de réaliser un actionneur convient à condition que l'on tolère un certain jeu sur la position des pièces mobiles.

Si l'on veut supprimer le jeu axial de la vis et du chariot, on peut prévoir en plus, autour de la vis et entre le chariot et le châssis, un ressort d'appui, mais cette solution est très imparfaite car la force d'appui du ressort dépend alors de la position du chariot. On peut améliorer la précision en rattrapant séparément le jeu axial de la vis par rapport au châssis par un premier ressort et le jeu axial du chariot par rapport à la vis au moyen d'un second ressort qui prend appui sur un écrou suiveur monté également sur la vis, ce qui complique évidemment le dispositif.

Par ailleurs, de telles mesures ne suffisent pas pour obtenir un actionneur de haute performance qui doit permettre d'atteindre une précision de l'ordre du μm et même moins et une résolution dix fois meilleure. Dans ce cas, tous les jeux doivent être totalement éliminés. Un moyen connu pour y parvenir consiste à utiliser des systèmes de coulisses et de paliers précontraints à billes pour le guidage du chariot et éventuellement aussi des transmissions à billes entre ce dernier et la vis.

Or, la présence de tels composants à billes est peu compatible avec la miniaturisation souhaitable pour des applications comme celles que l'on a mentionnées précédemment.

Par ailleurs, plus ces composants sont petits, plus ils sont coûteux, délicats et sujets à une usure rapide due au caractère fortement hyperstatique de leurs liaisons et aux contraintes élevées qui en résultent. Par conséquent, les jeux qu'ils sont chargés de supprimer réapparaissent assez vite au cours de l'utilisation et plus ces jeux deviennent importants, plus la précision de l'actionneur et du translateur dont ils font partie diminue.

De plus, lorsqu'ils sont motorisés, les actionneurs de ce genre sont munis de sécurités électroniques de fin de course, comme des interrupteurs ou des cellules photoélectriques, qui permettent d'arrêter le moteur avant que le chariot touche le châssis mais qui risquent de ne pas toujours fonctionner. Lorsque c'est effectivement le cas, le chariot vient buter contre le châssis et la vis, qui continue de tourner, sollicite élastiquement ce dernier jusqu'à ce que les couples de frottement induits par sa poussée axiale soient suffisants pour arrêter le moteur. Comme la vis est irréversible, le frottement subsiste après l'arrêt du moteur et, en général, celui-ci ne dispose pas d'un couple suffisant pour repartir en sens inverse, ce qui fait que le mécanisme reste bloqué.

Lorsque cette panne se produit dans des actionneurs à vis de taille relativement grande, il est facile de procéder à un déblocage manuel et on peut même tenter de supprimer le risque de panne en complétant les sécurités électroniques par des sécurités mécaniques.

En revanche, pour des actionneurs de très petites dimensions, le déblocage manuel est très délicat et la présence de sécurités mécaniques additionnelles ne va pas de pair avec la miniaturisation.

La présente invention a pour but de fournir un nouvel actionneur à vis pour translateur qui ne présente par ces inconvénients.

Ce but est atteint dans un actionneur à vis selon le préambule de la revandication 1 ayant les caractéristiques de la partie caractérisante.

Il résulte de ces caractéristiques tout d'abord un positionnement rigoureux en translation du chariot. En effet, la vis étant maintenue axialement sans aucun jeu possible, son filet répercute la référence de position de la base aux flancs de celui-ci. Or, comme les surfaces de contact de l'élément suiveur sont contraintes élastiquement à s'appuyer toujours sur ces flancs, et ce sans aucun jeu axial possible, la position du chariot par rapport à l'axe de la vis est toujours rigoureusement fixée quel que soit l'endroit où le chariot est placé sur sa trajectoire. Cette propriété que confèrent les caractéristiques de l'invention à l'actionneur induit d'autres avantages qui sont une hystérésis pratiquement inexistante au niveau de l'accouplement entre la vis et le chariot et une excellente reproductibilité des positions du chariot par rapport à la base.

En outre, le fait que l'élément suiveur n'est en contact avec le filet de la vis que sur une faible portion angulaire et que par ailleurs, il y est engagé par sollicitation élastique, élimine tout risque de blocage du chariot sur la vis, même lorsque les sécurités électroniques de fin de course ne fonctionnement pas convenablement. En effet, grâce à la disposi-

tion préconisée par l'invention, l'élément suiveur ne forme pas écrou sur la vis et ne peut donc pas se bloquer sur celui-ci.

Enfin, comme les moyens de poussée élastique agissent transversalement à la direction d'avance du chariot, leur action est constante sur toute la course de celui-ci, tandis que l'usure et les jeux qui en pourraient résulter sont rattrapés sans nuire en aucune manière à la précision de positionnement du chariot.

L'invention sera mieux comprise à la lecture de la description suivante, donnée uniquement à titre d'exemple et faite en se référant aux dessins annexés sur lesquels:

- la figure 1 est une vue schématique en coupe transversale d'un actionneur à vis, mettant en évidence le concept de base de la présente invention;
- la figure 2 est une vue à grande échelle montrant le profil du filet de la vis du translateur et la coopération de celle-ci avec l'élément suiveur;
- la figure 3 est une vue en plan du mode de réalisation préféré de l'actionneur à vis suivant l'invention;
- les figures 4 à 9 sont des vues en coupe respectivement selon les lignes de coupe correspondantes indiquées en chiffres romains sur la figure 3;
- la figure 10 est une vue schématique d'une variante de réalisation de l'actionneur.

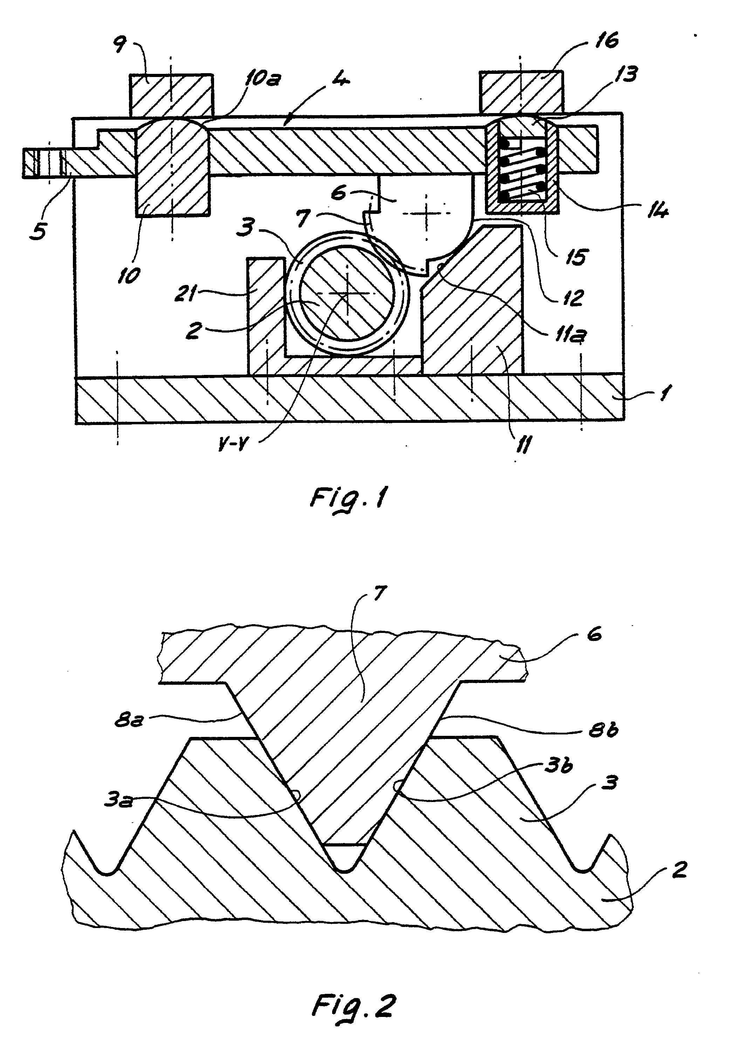

On va d'abord se référer aux figures 1 et 2 qui illustrent schématiquement le concept de base de l'invention.

Sur une base de référence 1 est assujettie une vis 2 de manière qu'elle soit immobilisée axialement mais mobile en rotation, son filet 3 constituant ainsi par les flancs 3a et 3b de ses spires hélicoïdales une référence de position le long de l'axe V-V de la vis 2.

Un chariot 4 connecté à un objet à déplacer (non représenté) par exemple à l'aide d'un organe de couplage 5, est suspendu dans la base 1 de manière à pouvoir se déplacer en translation dans une direction qui est parallèle à l'axe V-V de la vis 2.

Il comporte un élément suiveur 6 supposé ici comporter une nervure 7 (figure 2) à section trapézoïdale présentant des surfaces latérales de contact 8a et 8b et formant elle-même une portion de filet hélicoïdale complémentaire au filet de la vis 2.

Le chariot 4 est monté sur la base 1 à l'aide de moyens de suspension qui admettent, outre le mouvement de translation principal le long de l'axe V-V de la vis 2, un mouvement contrôlé de basculement autour d'un axe qui est parallèle à l'axe de la vis, tous les autres mouvements lui étant interdits. On verra par la suite, lors de la description d'un mode de réalisation concret de l'invention, quels peuvent être les organes qui assurent cette stabilité du chariot.

Pour la compréhension du principe de base de l'invention, il suffit de noter que les moyens de suspension comprennent un guide 9 fixé sur la base et avec lequel coopère une semelle 10 à surface d'appui bombée 10a et une glissière 11 à surface d'appui plane 11a inclinée vers la vis 2, glissière avec laquelle coopère une surface cylindrique d'appui 12 ménagée sur le chariot 4.

Ce dernier comprend également des moyens élastiques de poussée formés par une semelle mobile 13 montée dans un manchon 14 fixé à son tour sur le chariot et renfermant un ressort 15 qui sollicite la semelle mobile 13 contre un guide 16 de la base 1.

On comprend que le chariot 4 est ainsi sollicité élastiquement autour de son axe de basculement de manière telle que les surfaces latérales de contact 8a et 8b de la nervure 7 soient appuyées fermement contre les flancs 3a et 3b de la portion angulaire correspondante du filet de la vis 2 par une composante de force qui est dirigée à peu près parallèlement à la surface 11a de la glissière 11. Dès lors, la précision de positionnement selon la direction de translation du chariot 4 dépend uniquement de la précision avec laquelle le filet 3 est taillé dans la vis 2, la position axiale de celle-ci par rapport à la base 1 étant parfaitement définie et tout jeu entre l'élément suiveur et le filet étant éliminé par l'appui élastique qui est assuré par la suspension particulière du chariot 4.

La figure 1 montre également que le positionnement latéral du chariot (c'est-à-dire transversalement par rapport à sa direction de déplacement) peut avantageusement être obtenu par la présence de la surface d'appui inclinée 11a et de la surface cylindrique 12 du chariot. Cette disposition particulière permet de décomposer la force d'appui élastique engendrée par le ressort 15 essentiellement et une force maintenant la nervure 7 dans le filet 3 de la vis 2 et une force qui applique la surface cylindrique 12 sur la glissière 11. Il en résulte que le chariot 4 peut être dépourvu de tout autre guidage latéral sur la base 1 ce qui permet de simplifier les semelles 10 et 13 formées par de simples portions de surface sphérique faciles à réaliser et n'induisant pratiquement aucun frottement sur le guidage.

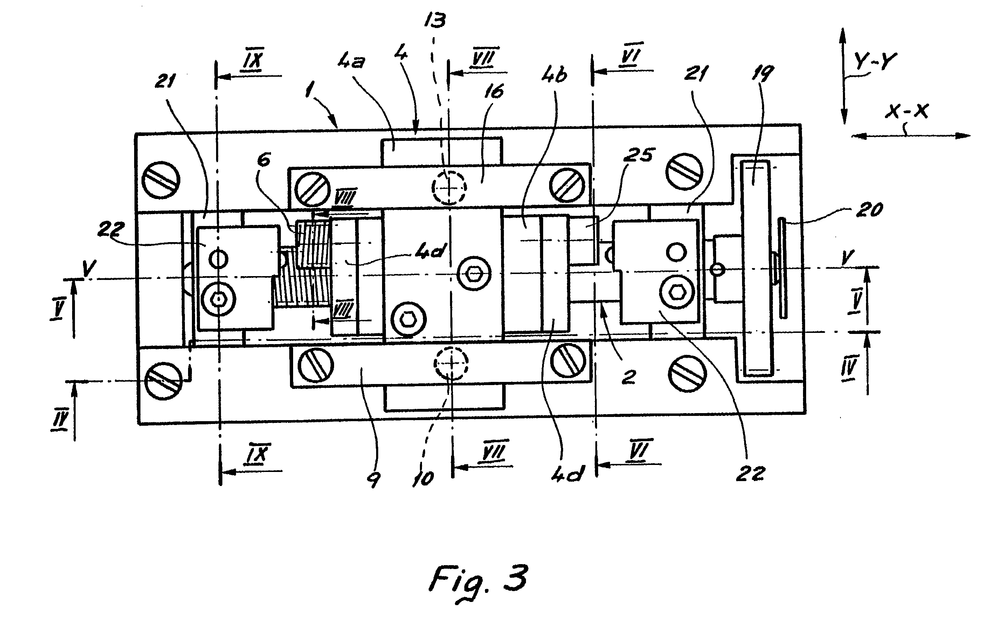

On va maintenant décrire les figures 3 à 9 qui montrent un mode de réalisation préféré de l'invention. Sur ces figures, les éléments déjà décrits à propos des figures 1 et 2 portent les mêmes références numériques.

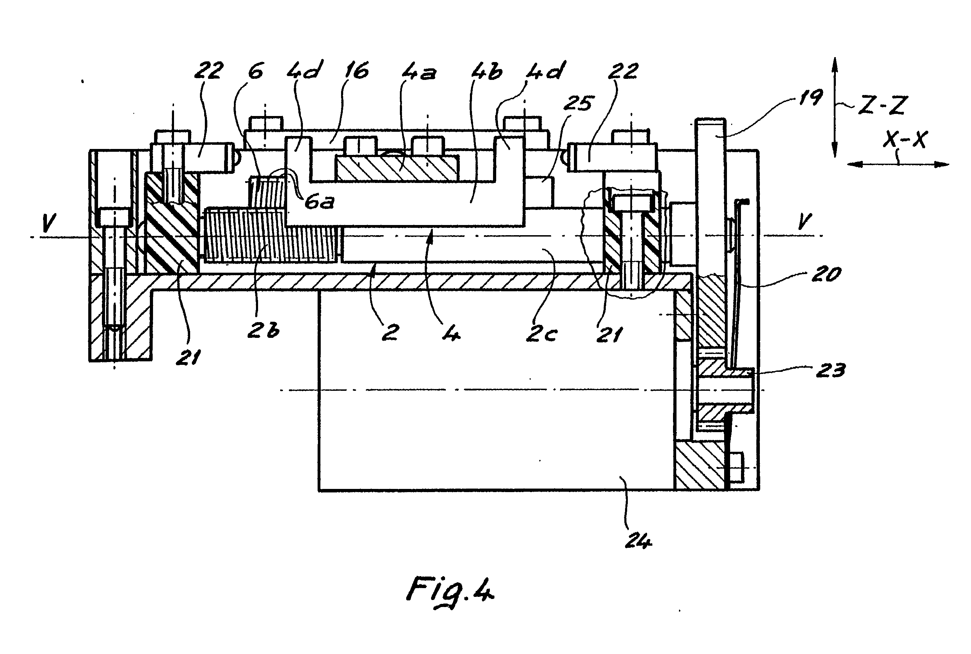

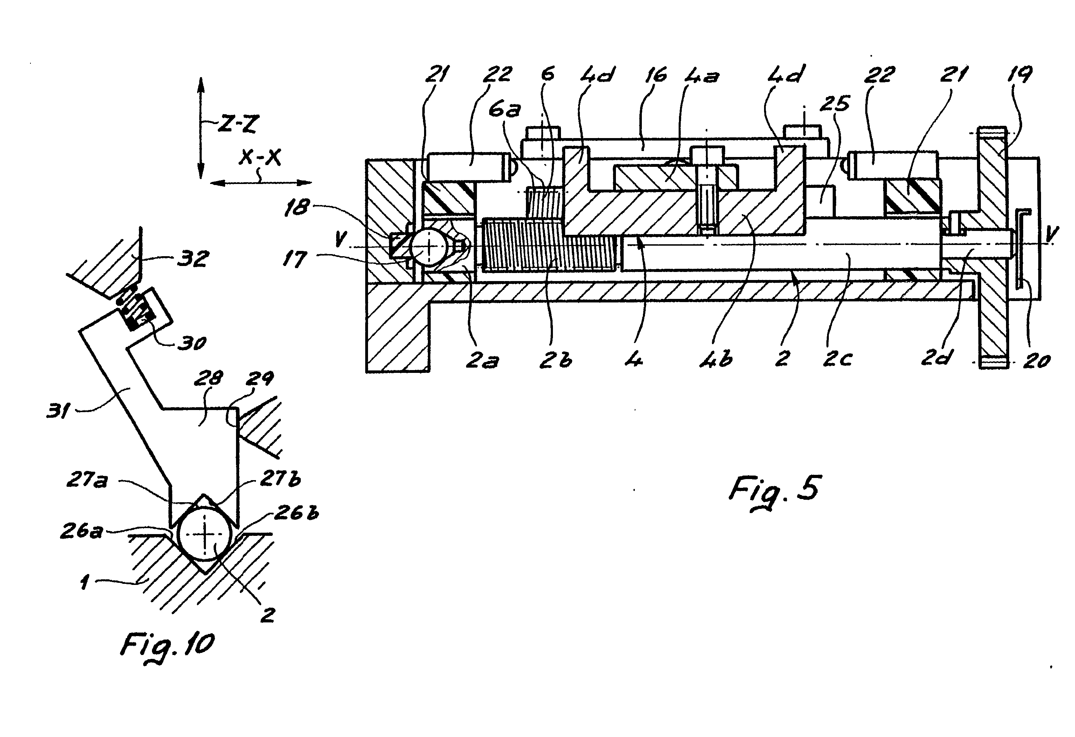

La vis 2 apparaît le plus clairement sur les figures 4 et 5. Elle comporte une portion de butée axiale 2a dans laquelle est reçue une bille d'appui 17, en saphir par exemple, qui coopère avec un palier axial fixe 18 monté dans la base 1. Le filet 3 est prévu sur une seconde portion 2b de la vis suivie d'une troisième portion 2c à surface extérieure lisse. La vis se termine par une portée 2d sur laquelle est calée une roue dentée 19 destinée à assurer l'entraînement en rotation de la vis.

La vis 2 est axialement appliquée contre le palier 18 au moyen d'un ressort à lame 20 fixé dans la base 1 et en appui contre la face d'extrémité de la portion 2d de la vis 2. Grâce à cet agencement, la vis et par conséquent sa portion filetée 2b ont une position axiale parfaitement définie par rapport à la base qui constitue la référence par rapport à laquelle le chariot 4 doit être positionné.

Deux paliers radiaux 21 de forme identique assurent la suspension à rotation de la vis 2 sur la base 1.

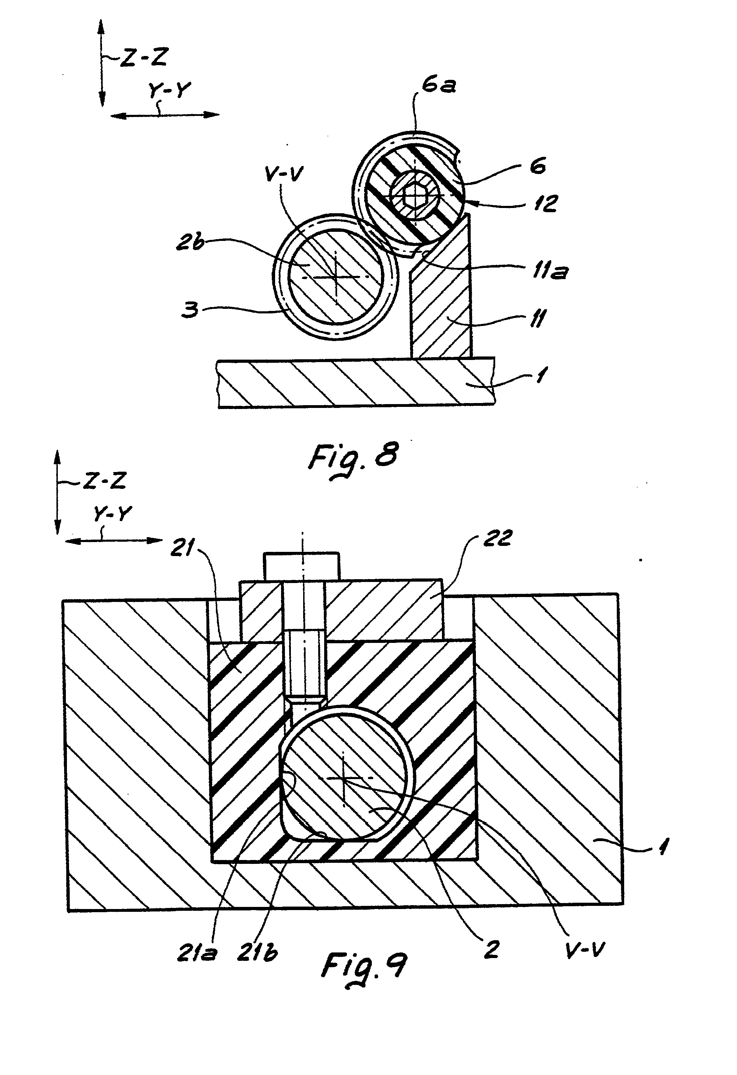

Sur la figure 9, on voit que chaque palier 21 comporte un orifice dont la paroi présente deux plats 21a et 21b disposés à 90° l'un par rapport à l'autre et contre lesquels la vis 2 est en appui par deux génératrices de ses deux portions respectives 2a et 2c. Le reste de la paroi de l'orifice est dégagé de la vis 2. Comme on peut le constater en examinant les figures 8 et 9, les plats 21a et 21b sont disposés en opposition par rapport au sens d'application de la force avec laquelle l'élément suiveur 6 est poussé dans le filet 3 de la vis 2. Il en résulte ainsi que les moyens élastiques formés principalement par le ressort 15 servent également à positionner radialement cette vis.

Le chariot 4, outre les éléments déjà décrits à propos de la figure 1, comprend une plaquette 4a (figures 3 et 4) dans laquelle sont montées les semelles fixe et mobile 10 et 13, ainsi qu'un bloc allongé en forme d'étrier 4b s'étendant dans la direction de translation du chariot et sur lequel est vissée la plaquette 4a. Le bloc 4b comporte un dégagement 4c (figure 4) pour la vis 2 ainsi que deux ailes 4d s'étendant vers le haut et destinées à actionner des interrupteurs de fin de course 22 montés respectivement sur les paliers 21. L'objet à déplacer peut être connecté à la plaquette 4a, par exemple latéralement comme il est suggéré à la figure 1.

La roue dentée 19 (figure 4) est en prise avec un pignon d'attaque 23 calé sur l'arbre de sortie d'un moteur 24 fixé sur la base 1. Il est à noter que l'entraînement de la vis peut être manuel, un bouton pouvant être prévu à cet effet, par exemple sur l'arbre du pignon 23.

Comme le représente en particulier la figure 8, l'élément suiveur 6 est un patin de forme générale cylindrique vissé contre la face d'extrémité correspondante du bloc 4b du chariot 4. Ce patin comporte une série de nervures contiguës 6a de forme hélicoïdale dont le profil est celui représenté à la figure 2. Ces nervures s'étendent angulairement sur à peu près 270°. La zone restante de la surface cylindrique du patin constitue la surface d'appui lisse 12 qui coopère avec la surface 11a de la glissière 11. Le patin est fabriqué de préférence en taillant un filet continu à la surface d'un manchon cylindrique, ce filet ayant les mêmes caractéristiques que le filet 3 de la vis 2, puis à enlever la portion du filet dans la zone de la surface 12 jusqu'au diamètre correspondant au fond du filet.

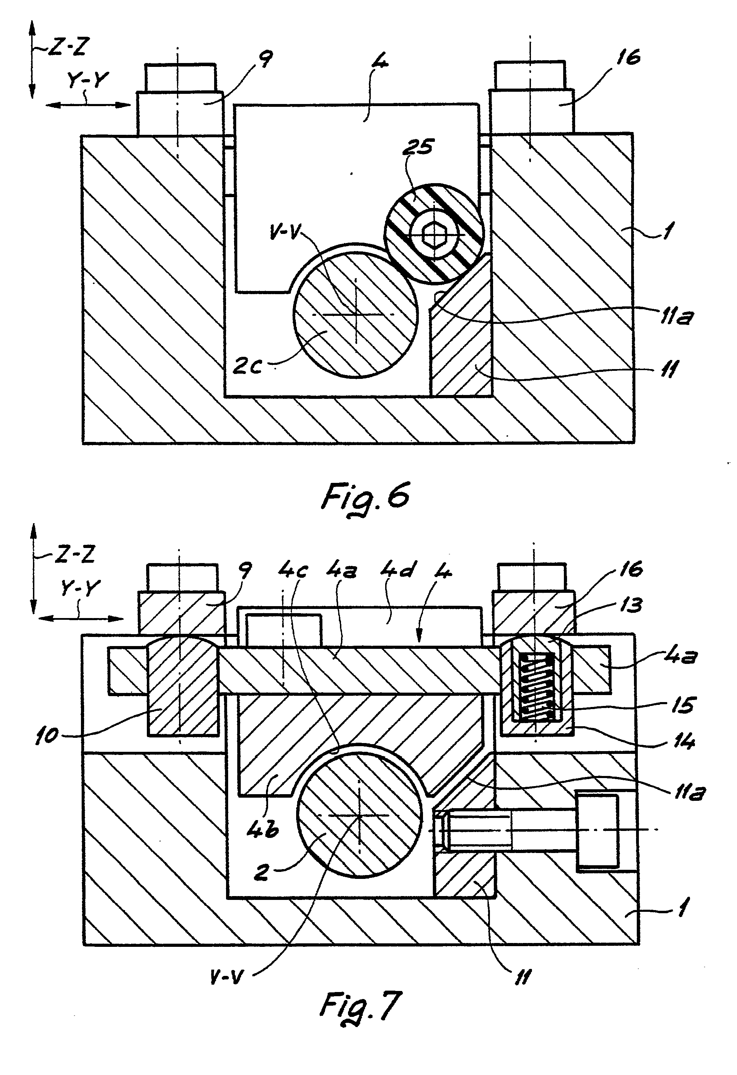

Sur la figure 6, on voit que le chariot 4 porte également un patin lisse 25 formé par un manchon cylindrique lisse fixé contre la face d'extrémité du bloc 4b opposée à celle portant le patin nervuré formant l'élément suiveur 6. Les deux patins sont alignés, le diamètre du patin lisse étant approximativement égal au diamètre de la surface 12 du patin nervuré 6. Le patin lisse est en contact d'une part avec la portion lisse 2c de la vis 2 et d'autre part avec la surface 11a de la glissière 11, le contact étant assuré élastiquement grâce à l'action du ressort 15.

Les six degrés de liberté dont est doté tout corps se déplaçant dans l'espace sont en général définis comme constitués de trois mouvements linéaires le long de trois axes orthogonaux X-X, Y-Y et Z-Z (symbolisés par les flèches sur les figures) et de trois mouvements de rotation respectivement autour de ces axes appelés communément mouvements de roulis (axe X-X), de tangage (axe Y-Y) et de lacet (axe Z-Z).

Dans l'actionneur à vis suivant l'invention, le mouvement linéaire du chariot 4 selon l'axe X-X est celui qui correspond à sa translation le long de la vis 2 qui reste le seul degré de liberté possible pour ce chariot. On a vu que l'agencement suivant l'invention permet de déterminer avec une grande précision le positionnement du chariot 4 le long de cet axe X-X car les surfaces 3a, 3b et 8a, 8b sont toujours en appui les unes sur les autres grâce aux moyens de poussée élastique qui agissent selon un mouvement de roulis autour de cet axe. Cependant, selon l'invention, les mêmes moyens de poussée élastique permettent également de bloquer les autres degrés de liberté du chariot 4 grâce à l'agencement judicieux des autres surfaces d'appui que présente le chariot 4, d'une part, et la base 1 et la vis 2, d'autre part.

C'est ainsi que le mouvement linéaire selon l'axe Y-Y est empêché par l'appui du patin lisse 25 et du patin nervuré 6 sur la vis 2 et sur la glissière 11 (figures 6 et 8).

Le mouvement de lacet (rotation autour de l'axe Z-Z) est bloqué par ces mêmes organes qui coopèrent par ailleurs avec les semelles 10 et 13 et les guides 9 et 16 pour bloquer le mouvement linéaire selon l'axe Z-Z.

Le blocage du mouvement de tangage (rotation autour de l'axe Y-Y) résulte de l'appui des patins 6 et 25 sur les portions correspondantes 2b et 2c de la vis 2 et également sur la surface 11a de la glissière 11.

Il est à noter, par ailleurs, que l'élément suiveur pourrait ne comporter qu'une seule nervure. Cependant, une pluralité de nervures comme représentées aux dessins, assure une meilleure transmission de l'effort d'avance de la vis sur le chariot, une éventuelle différence de forme des nervures adjacentes et une imprécision sur le filet de la vis pouvant facilement être compensées si le patin nervuré est réalisé en une matière ayant une certaine élasticité, tel par exemple le matériau thermoplastique commercialisé sous la marque "Turcite".

On peut aussi remarquer que les moyens de poussée élastique matérialisés par le seul ressort 15 permettent d'utiliser des paliers pour la vis 2 formés par de simples surfaces planes telles que les plats 21a et 21b (figure 9) contre lesquels la vis est en appui par des génératrices seulement. Cette disposition favorise l'efficacité du positionnement longitudinal de la vis 2 ne nécessitant qu'une simple butée à bille et un seul ressort disposés respectivement aux extrémités de la vis.

Il est clair que l'agencement suivant l'invention, grâce à sa construction extrêmement simple dépourvue de guidages précontraints à billes pour le chariot et d'une transmission complexe entre la vis et le chariot, permet une miniaturisation poussée des composants et une grande précision de positionnement du chariot. Il s'est avéré que cette précision peut être meilleure que le micromètre. A titre indicatif, on peut noter que l'actionneur construit conformément aux figures 3 à 9 présente une longueur de 85 mm, une largeur de 35 mm et une hauteur de 20 mm (sans compter le moteur 24 et la roue 19). Il est également à remarquer que le montage de l'actionneur est simple, car la vis et le chariot peuvent simplement être posés dans le mécanisme sans aucun réglage ou précaution particulière et y être maintenus après montage des guides 9 et 16.

La figure 10 représente très schématiquement une variante de l'actionneur afin de montrer que les diverses surfaces d'appui du chariot et de la vis peuvent être agencées d'une autre façon que celle qui vient d'être décrite, tout en restant dans le cadre de l'invention.

Dans ce cas, la base 1 définit des surfaces d'appui 26 et 26b disposées en V et en regard de surfaces d'appui, 27a et 27b, également en forme de V, ménagées sur un chariot 28.

Le chariot 28 est par ailleurs en appui contre un guide latéral 29 et est sollicité élastiquement à basculer autour d'un axe parallèle à l'axe de la vis 2 par des moyens élastiques formés par un ressort 30 qui agit sur l'extrémité d'un bras 31 du chariot 28. Le ressort 30 est en appui contre un guide 32 de la base.

Pour assurer la transmission du mouvement de la vis sur le chariot, celui-ci est équipé d'un élément suiveur (non représenté) pouvant être formé par une nervure qui est en saillie de la surface 27a ou de la surface 27b.

Comme dans le mode de réalisation des figures 3 à 9, l'appui du chariot 28 sur la vis peut être réalisé au moyen de deux patins espacés axialement et présentant le profil en V des surfaces 27a et 27b, l'un de ces patins étant équipé de l'élément suiveur.

## Revendications

1. Actionneur à vis, notamment pour microtranslateur, comprenant une base fixe de référence (1), une vis micrométrique (2) assujettie à rotation à cette base fixe, des moyens moteurs (19, 23, 24) pour imprimer à la vis un mouvement de rotation autour de son axe (V-V) et un chariot (4, 28) couplé à l'organe à déplacer et monté en translation sur la base fixe (1) selon une direction (X-X) parallèle à l'axe (V-V) de la vis (2), le chariot (4, 28) comprenant un élément suiveur (6, 6a) engagé dans le filet (3) de la vis (2) et pourvu d'au moins deux surfaces de contact (8a, 8b) appliquées respectivement contre les flancs (3a, 3b) du filet (3) de la vis (2), les surfaces de contact (8a, 8b) de l'élément suiveur (6) sont engagées dans une portion, limitée angulairement, du filet (3) de la vis (2); caractérisé en ce que le chariot comporte:
- en ce que le chariot (4, 28) est monté mobile sur la base (1) par l'intermédiaire de moyens de suspension (2c, 25, 9 à 12; 26 à 29) admettant un basculement limité du chariot autour d'un axe (X-X) parallèle à l'axe (V-V) de la vis (2);
- et en ce qu'il est prévu des moyens de poussée élastique (13 à 16; 30, 32) prenant appui sur la base (1) et coopérant avec les moyens de suspension pour solliciter le chariot (4, 28) autour de son axe de basculement (X-X) de manière à maintenir lesdites surfaces de contact (8a, 8b) en appui sur les flancs (3a, 3b) du filet (3) de la vis (2).

2. Actionneur suivant la revendication 1, caractérisé en ce que lesdits moyens de suspension du chariot (4) comprennent au moins trois jeux de surfaces d'appui conjuguées (9, 10a; 11a, 12; 11a, 25 et 2c, 25) prévues respectivement sur la base (1) et le chariot (4), les surfaces de chacun desdits jeux étant appliquées l'une sur l'autre par la seule action desdits moyens de poussée élastique (13 à 16; 30, 32), le premier de ces jeux de surfaces conjuguées (9, 10a) matérialisant ledit axe de basculement (X-X) dudit chariot.

3. Actionneur suivant la revendication 2, caractérisé en ce que l'une des surfaces d'appui du premier jeu de surfaces conjuguées comprend un guide (9) s'étendant dans la direction du mouvement de translation du chariot (4) et fixé à la base (1), en ce que la seconde surface (10a) de ce premier jeu est définie sur une semelle (10) à surface active bombée fixée sur le chariot (4), en ce que le deuxième jeu de surfaces conjuguées comprend deux paires de surfaces (11a, 12), en ce que le troisième jeu comprend deux paires de surfaces (11a, 25 et 2c, 25) séparées l'une de l'autre transversalement par rapport à l'axe de la vis (2) et en ce que lesdits deuxième et troisième jeux sont espacés l'un de l'autre dans la direction du mouvement de translation du chariot (4).

4. Actionneur suivant la revendication 3, caractérisé en ce que les surfaces d'appui (11a) appartenant auxdits deuxième et troisième jeux espacés et prévues sur la base (1) sont formées par une surface plane d'une seule et même glissière montée sur la base et en ce que les surfaces d'appui appartenant auxdits deuxième et troisième jeux espacés mais prévues sur le chariot (4) sont ménagées sur deux patins (6, 25) de forme cylindrique, de même axe et en contact avec ladite glissière par une génératrice.

5. Actionneur suivant la revendication 4, caractérisé en ce que ledit élément suiveur est formé par l'un desdits patins (6) qui présente une première portion de surface angulaire sur laquelle est en saillie au moins une nervure hélicoïdale (7) dont les flancs latéraux définissent lesdites surfaces de contact (8a, 8b), et une seconde portion de surface angulaire lisse (12), qui est en contact avec ladite glissière (11).

6. Actionneur suivant l'une quelconque des revendications 3 à 5, caractérisé en ce que la surface plane (11a) de ladite glissière (11) est contigue à ladite vis (2) et inclinée par rapport à celle-ci de telle manière que lesdits moyens de poussée élastique (13 à 16) sollicitent lesdites surfaces de contact (8a et 8b) de l'élément suiveur (6) contre les flancs (3a et 3b) du filet (3) de la vis (2) par une composante de force orientée à peu près parallèlement à ladite surface plane (11a) de la glissière (11).

7. Actionneur suivant l'une quelconque des revendications 5 et 6, caractérisé en ce que l'autre desdits patins (25) coopère avec une surface lisse d'appui cylindrique (2a) ménagée sur la vis (2) dans le prolongement de la portion de celle-ci portant ledit filet (3).

8. Actionneur suivant l'une quelconque des revendications 6 et 7, caractérisé en ce que ladite vis (2) est suspendue radialement dans des paliers (21) définissant chacun deux surfaces d'appui (21a, 21b) parallèles à l'axe de la vis et formant un dièdre d'environ 90 , et en ce que ladite vis (2) comporte à ses deux extrémités des portées cylindriques (2a, 2c) qui sont appuyées contre lesdites surfaces d'appui (21a, 21b) en vertu de l'action desdits moyens de poussée élastique (13 à 16).

## Claims

1. A screw type actuator, in particular for a microtranslator, comprising a fixed reference base (1), a micrometric screw (2) rotatably carried by the said fixed base, motor means (19, 23, 24), and a carriage (4) which is coupled to the member to be displaced and which is arranged to be driven in translational movement by the rotation of the screw in a direction X–X parallel to the axis of the screw; the said screw includes at least one threaded portion (2b) and an unthreaded portion (2c); characterised in that the carriage includes:
 — a follower element (6), having at least one screw portion (6a), and a smooth finger (825), both of cylindrical shape, the said follower element and the said smooth finger having their axes parallel to the axis of the screw and being in contact firstly with a reference plane (11a) which is fixed to the fixed base, and secondly (as to the follower element) with the threaded portion of the screw, or (as to the smooth finger) with the smooth portion of the screw;
 — first suspension means (10) and second suspension means (13–15) in contact with, respectively, a first slide (9) and a second slide (16), which are parallel to each other and to the axis of the screw, and which are secured to the said fixed reference base, the contracts between the said suspension means and the said slides being located in a plane which is perpendicular to the axis of the screw and which is spaced substantially equally from the said follower element and from the said smooth finger; and in that the said second suspension means include resilient thrust means (15) acting firstly to apply the said first and second suspension means against the said first and second slides, and secondly to apply the said follower element and the said smooth finger against the screw and against the said reference base, so as the said carriage can only be driven in a direction of translation X–X parallel to the axis V–V of the screw.

2. An actuator according to Claim 1, characterised in that the surfaces of the slides against which the suspension means are engaged are flat, and the surfaces of the suspension means are domed.

3. An actuator according to Claim 1, characterised in that the finger and the follower element are in contact on the same reference plane.

4. An actuator according to Claim 1, characterised in that the follower element has a first angular surface portion from which projects at least one helical rib (7), the side flanks of which define contact surfaces (8a, 8b) for contact with the flanks (3a, 3b) of the thread of the screw, and a smooth second angular surface portion (12), which is in contact with the said reference plane.

5. An actuator according to Claim 1, characterised in that the reference plane is contiguous with the screw (2) and inclined with respect to the latter, in such a way that the said resilient thrust means urge the said contact surfaces (8a, 8b) of the follower element against the flanks (3a and 3b) of the thread (3) of the screw with a component of force which is orientated nearly parallel to the said reference plane.

6. An actuator according to Claim 1, characterised in that the said screw is suspended radially in bearings (21), each of which defines two bearing surfaces (21a, 21b) which are parallel to the axis of the screw and which define a chevron of about 90 degrees, and in that the said screw includes at its two ends cylindrical surfaces (2a, 2c) which are applied against the said bearing surfaces (21a, 21b) by virtue of the action of the said resilient thrust means.

## Patentansprüche

1. Schraubgetriebe insbesondere für Mikrotranslator, umfassend eine feste Bezugsbasis (1), eine an der festen Basis angeordnete Mikrometerschraube (2), Antriebsmittel (19, 23, 24) und einen mit einem zu verlagernden Organ gekuppelten und durch Drehung der Schraube in einer Richtung X-X parallel zur Schraubenachse translatorisch angetriebenen Schlitten (4), welche Schraube mindestens einen Gewindeabschnitt (2b) und einen gewindefreien Abschnitt (2c) aufweist, dadurch gekennzeichnet, daß der Schlitten umfaßt:
 — ein Folgeelement (6), das mindestens einen Gewindeabschnitt (6a) aufweist und einen glatten Gleitschuh (25), beide in zylindrischer Form, wobei das Folgeelement und der Gleitschuh mit ihren Achsen parallel zur Schraubenachse angeordnet sind und in Kontakt einerseits mit einer Bezugsebene (11a) stehen, die an der festen Basis befestigt ist und andererseits mit dem Gewindeabschnitt der Schraube für das Folgeelement bzw. dem glatten Schraubenabschnitt für den glatten Gleitschuh;
 — erste (10) und zweite (13-15) Abstützmittel in Kontakt jeweils mit einer ersten (9) und einer zweiten (16) Gleitbahn, die parallel zueinander und zur Schraubenachse verlaufen und an der festen Bezugsbasis befestigt sind, wobei die Kontakte zwischen den Abstützmitteln und den Gleitbahnen in einer zur Schraubenachse senkrechten Ebene liegen, die etwa gleichen Abstand von dem Folgeelement und dem Gleitschuh hat und daß die zweiten Abstützmittel elastische Andruckmittel (15) umfassen mit dem Ergebnis, daß einerseits die ersten und zweiten Abstützmittel gegen die erste bzw. zweite Gleitbahn angepreßt werden und andererseits das Folgeelement und der glatte Gleitschuh gegen die Schrauben und gegen die Bezugsebene, befestigt an der festen Referenzbasis, angedrückt werden, dank welcher Anordnung der Schlitten nur in einer Translationsrichtung X-X parallel zur Achse V-V der Schraube antreibbar ist.

2. Getriebe nach Anspruch 1, dadurch gekennzeichnet, daß die Gleitbahnoberflächen, gegen die sich die Abstützmittel anlegen, eben sind und daß die Abstützmitteloberflächen bombiert sind.

3. Getriebe nach Anspruch 1, dadurch gekennzeichnet, daß der Gleitschuh und das Folgeelement auf derselben Bezugsebene in Kontakt sind.

4. Getriebe nach Anspruch 1, dadurch gekennzeichnet, daß das Folgeelement einen ersten Oberflächenwinkelbereich aufweist, auf dem mindestens ein Schraubgewindegang (7) vorspringt, dessen seitliche Flanken die Kontaktflächen (8a, 8b) mit den Flanken (3a, 3b) des Schraubengewindes bilden und einen zweiten Oberflächenwinkelabschnitt (12), der glatt ist und in Kontakt mit der Bezugsebene.

5. Getriebe nach Anspruch 1, dadurch gekennzeichnet, daß die Bezugsebene neben der Schraube (2) angeordnet ist und geneigt ist relativ zu dieser derart, daß die elastischen Anpaßmittel die Kontaktoberflächen (8a, 8b) des Folgeelements gegen die Flanken (3a, 3b) des Gewindes (3) der Schraube vorspannen durch eine Kraftkomponente, die etwa parallel zur Bezugsebene verläuft.

6. Getriebe nach Anspruch 1, dadurch gekennzeichnet, daß die Schraube radial in Lagern (21) aufgenommen ist, die jeweils zwei Anschlagflächen (21a, 21b) parallel zur Schraubenachse definieren und einen Innenwinkel von etwa 90° bilden und daß die Schraube an ihren beiden Enden zylindrische Tragstücke (2a, 2c) aufweist, die gegen die genannten Abstützflächen (21a, 21b) unter der Wirkung der elastischen Anpreßmittel angedrückt werden.

EP 0 265 379 B1

Fig. 1

Fig. 2

Fig. 3

EP 0 265 379 B1

Fig.4

Z-Z

X-X

18

17

V

21 22 6 4d 16 4a 4d 25 22 21 19
6a 6a

V

2a 2b 4 4b 2 2c 2d 20

Fig. 5

32

30

31

28 29

27a 27b

26a 26b

1

2

Fig. 10

EP 0 265 379 B1

Fig.6

Fig.7

Z-Z

Y-Y

6a

V-V

6

12

2b

11a

3

11

1

Fig. 8

Z-Z

Y-Y

21

22

1

21a  21b

2

V-V

Fig. 9